# EUROPEAN PATENT APPLICATION

(11) **EP 3 248 947 A1**
(43) Date of publication of application: **29.11.2017**
(21) Application number: 16758796.3
(22) Date of filing: 23.02.2016
(51) Int. Cl.: C02F 1/46, C25B 9/00, C25B 9/02

(54) **ELECTROLYZED WATER-GENERATING DEVICE**

(30) Priority: 02.03.2015 JP 2015040557
(71) Applicant: Nihon Trim Co., Ltd., Osaka 531-0076 (JP)
(72) Inventor: TACHIBANA Takahito, Nankoku-shi Kochi 783-0060 (JP)
(74) Representative: Manitz Finsterwald Patentanwälte PartmbB
(86) International application number: PCT/JP2016/055202
(87) International publication number: WO 2016/140102

(57) **Abstract**

An electrolytic water production device comprises an electrolytic cell (4) formed by fixing a first case piece (50) and a second case piece (60) together. The first case piece (50) is provided on its inner surface with first projections (53) pressed against and in contact with the anode power feeder and arranged in a matrix in a longitudinal direction (v) and a lateral direction (H). The second case piece (60) is provided on its inner surface with second projections (63) pressed against and in contact with the cathode power feeder and arranged in the matrix. The second projections (63) are each disposed between the first projections (53) adjacent right next to each other in the longitudinal direction and in the lateral direction. Thereby, a flow of water supplied onto a surface of each of the power feeders is made uniform, therefore, concentration of dissolved hydrogen can be easily increased.

## Description

### Technical Field

The present invention relates to an electrolytic water production device that electrolyzes water to produce electrolytic hydrogen water.

### Background Art

Conventionally, there has been known an electrolytic water production device that includes an electrolytic cell having an anode chamber and a cathode chamber divided by a diaphragm and electrolyzes raw water such as tap water introduced into the electrolytic cell to produce electrolytic hydrogen water (for example, refer to Patent Literature 1).

The electrolytic hydrogen water with a hydrogen gas dissolved, which is produced in the cathode chamber of an electrolytic water production device, is expected to exert an excellent effect in improving gastrointestinal symptoms. In addition, in recent years, the electrolytic hydrogen water produced in an electrolytic water production device has been attracting attention for suitability for removing active oxygen.

### Citation List

### Patent Literature

Patent Literature 1: Japanese Patent No. 5639724

In an electrolytic water production device, the diaphragm is made thin to allow ions efficiently pass between the anode chamber and the cathode chamber. Accordingly, when the pressure difference between the anode chamber and the cathode chamber becomes too large, for example, it is possible that the diaphragm is damaged. Thereby, Patent Literature 1 discloses a configuration in which a stacked body comprising an anode power feeder, the diaphragm, and a cathode power feeder is formed in a wavy shape to enhance bending rigidity and suppress damage to the diaphragm.

However, in the electrolytic water production device disclosed in Patent Literature 1, major part of the electrolytic chamber is provided with a plurality of convex portions formed continuously in a longitudinal direction along a flow of water. In this electrolytic water production device, water quickly flows in grooves formed between the convex portions, therefore, water is sufficiently supplied onto surfaces of the power feeders.

However, the flow of water is slow on the surfaces of the power feeders at the part thereof on which the convex portions are continuously formed, therefore, it is possible that a sufficient amount of water is difficult to be supplied locally. As a result, when a large electrolytic current is supplied to the power feeders 41 and 42 to produce a large amount of hydrogen gas on the surface of the cathode power feeder 42, it is possible that concentration of dissolved hydrogen in the electrolytic hydrogen water locally becomes close to a saturation value at the continuous convex portions. In this case, the hydrogen gas produced on the surface of the power feeder is less likely to dissolve in the water, and the bubble-state hydrogen gas may flow out of the cathode chamber together with the electrolytic hydrogen water, therefore, it is possible that improvement in the concentration of the dissolved hydrogen in the entire cathode chamber is prevented.

### Summary of the Invention

### Problems to be solved by the Invention

The present invention was made in view of the above, and a primary object thereof is to provide an electrolytic water production device capable of easily increasing the concentration of the dissolved hydrogen by uniformizing the flow of water supplied onto the surfaces of the power feeders.

### Means for solving the Problem

In a first aspect of the present invention, an electrolytic water production device comprises an electrolytic cell provided with an electrolytic chamber to which water is supplied to be electrolyzed, an anode power feeder and a cathode power feeder arranged opposite to each other in the electrolytic chamber, and a diaphragm disposed between the anode power feeder and the cathode power feeder so as to divide the electrolytic chamber into an anode chamber located on a side of the anode power feeder and a cathode chamber located on a side of the cathode power feeder, wherein the diaphragm is sandwiched between the anode power feeder and the cathode power feeder, the electrolytic chamber is formed in the electrolytic cell by fixing a first case piece disposed on the side of the anode power feeder and a second case piece disposed on the side of the cathode power feeder together, a plurality of first projections pressed against and in contact with the anode power feeder is arranged in a matrix on an inner surface of the first case piece facing the electrolytic chamber in a longitudinal direction along a water flow in the electrolytic chamber and in a lateral direction perpendicular to the longitudinal direction, a plurality of second projections pressed against and in contact with the cathode power feeder is arranged in a matrix on an inner surface of the second case piece facing the electrolytic chamber in the longitudinal direction and in the lateral direction, and each of the second projections is disposed between a pair of the first projections adjacent right next to each other in the longitudinal direction and between a pair of the first projections adjacent right next to each other in the lateral direction.

In another aspect of the invention, it is preferred that the electrolytic chamber is formed in a rectangular shape elongated in the longitudinal direction.

In another aspect of the invention, it is preferred that the first projections and the second projections are formed in elongated shapes in the longitudinal direction.

In another aspect of the invention, it is preferred that top portions of the first projections include curved surfaces having centers thereof on a side of the first case piece, and top portions of the second projections include curved surfaces having centers thereof on a side of the second case piece side.

In another aspect of the invention, it is preferred that a plurality of first small projections smaller in height than the first projections are disposed on the inner surface of the first case piece facing the electrolytic chamber at positions opposed to the second projections with the diaphragm, the anode power feeder, and the cathode power feeder therebetween, and a plurality of second small projections smaller in height than the second projections are disposed on the inner surface of the second case piece facing the electrolytic chamber at positions opposed to the first projections with the diaphragm, the anode power feeder, and the cathode power feeder therebetween.

In another aspect of the invention, it is preferred that the first small projections and the second small projections are formed in elongated shapes in the lateral direction.

In another aspect of the invention, it is preferred that each of the first small projections and the second small projections have a groove penetrating therethrough in the longitudinal direction.

In another aspect of the invention, it is preferred that in the inner surface of the first case piece facing the electrolytic chamber, a region in which the first small projections are aligned in the lateral direction includes curved surfaces having centers thereof on a side of the second case piece in a cross section taken along the longitudinal direction, and in the inner surface of the second case piece facing the electrolytic chamber, a region in which the second small projections are aligned in the lateral direction includes curved surfaces having centers thereof on a side of the first case piece in a cross section taken along the longitudinal direction.

In a second aspect of the present invention, an electrolytic water production device comprises an electrolytic cell provided with an electrolytic chamber to which water is supplied to be electrolyzed, an anode power feeder and a cathode power feeder arranged opposite to each other in the electrolytic chamber, and a diaphragm disposed between the anode power feeder and the cathode power feeder so as to divide the electrolytic chamber into an anode chamber located on a side of the anode power feeder and a cathode chamber located on a side of the cathode power feeder, wherein the diaphragm is sandwiched between the anode power feeder and the cathode power feeder, the electrolytic chamber is formed in the electrolytic cell by fixing a first case piece disposed on the side of the anode power feeder and a second case piece disposed on the side of the cathode power feeder together, a plurality of first projections pressed against and in contact with the anode power feeder and a plurality of first small projections smaller in height than the first projections are disposed on an inner surface of the first case piece facing the electrolytic chamber, a plurality of second projections pressed against and in contact with the cathode power feeder is disposed on an inner surface of the second case piece facing the electrolytic chamber at positions opposed to the first small projections with the diaphragm, the anode power feeder, and the cathode power feeder therebetween, and a plurality of second small projections smaller in height than the second projections is disposed on the inner surface of the second case piece facing the electrolytic chamber at positions opposed to the first projections with the diaphragm, the anode power feeder, and the cathode power feeder therebetween.

In another aspect of the invention, it is preferred that the first small projections are not in contact with the anode power feeder, and the second small projections are not in contact with the cathode power feeder.

In another aspect of the invention, it is preferred that the first projections and the second projections are formed in elongated shapes in a longitudinal direction along a water flow in the electrolytic chamber.

In another aspect of the invention, it is preferred that the first small projections and the second small projections are formed in elongated shapes in a lateral direction perpendicular to the longitudinal direction.

### Advantageous Effects of the Invention

In the electrolytic water production device according to the first aspect of the present invention, the diaphragm is sandwiched between the anode power feeder and the cathode power feeder, the plurality of first projections pressed against and in contact with the anode power feeder is disposed on the inner surface of the first case piece, and the plurality of second projections pressed against and in contact with the cathode power feeder is disposed on the inner surface of the second case piece. Accordingly, the anode power feeder, the diaphragm, and the cathode power feeder are sandwiched between the first projections and the second projections, therefore, damage to the diaphragm is suppressed.

The first projections are arranged in a matrix in the longitudinal direction along the water flow in the electrolytic chamber and the lateral direction perpendicular to the longitudinal direction, and the second projections are also arranged in a matrix in the longitudinal direction and the lateral direction. In addition, the second projections are each arranged between a pair of the first projections adjacent right next to each other in the longitudinal direction and between a pair of the first projections adjacent right next to each other in the lateral direction. Accordingly, the first projections and the second projections are distributed discretely and scattered evenly in the longitudinal direction and the lateral direction, therefore, the flow of water to be supplied onto the surfaces of the power feeders is made uniform and the concentration of dissolved hydrogen is increased.

Further, in the electrolytic water production device according to the second aspect of the present invention, the second projections rectify the water flow in the cathode chamber, therefore, a general water flow in the longitudinal direction in the cathode chamber is obtained. In addition, the second small projections block part of the water flowing in the cathode chamber and guide the blocked water to peripheries of the second small projections. Accordingly, the water in the cathode chamber is locally stirred around the peripheries of the second small projections 64. with a merger between the general water flow and the local water flow, the flow of water to be supplied onto the surface of the cathode power feeder 42 is made further uniform, therefore, the concentration of dissolved hydrogen is increased.

### Brief Description of the Drawings

Fig. 1 is a block diagram of a schematic configuration of an electrolytic water production device according to an embodiment of the present invention.
Fig. 2 is an exploded perspective view of an electrolytic cell illustrated in Fig. 1.
Fig. 3 is a perspective view of a first case piece and a second case piece illustrated in Fig. 2.
Fig. 4 is an enlarged view of a cross section of the electrolytic cell illustrated in Fig. 2 in parallel with the flow of water.
Fig. 5 is an enlarged view of a cross section of the electrolytic cell illustrated in Fig. 2 perpendicular to the flow of water.
Fig. 6 is a transparent front view of the second case piece and a stacked body in the electrolytic cell illustrated in Fig. 2.

### Description of the Preferred Embodiment

An embodiment of the present invention will now be described below in conjunction with accompanying drawings.

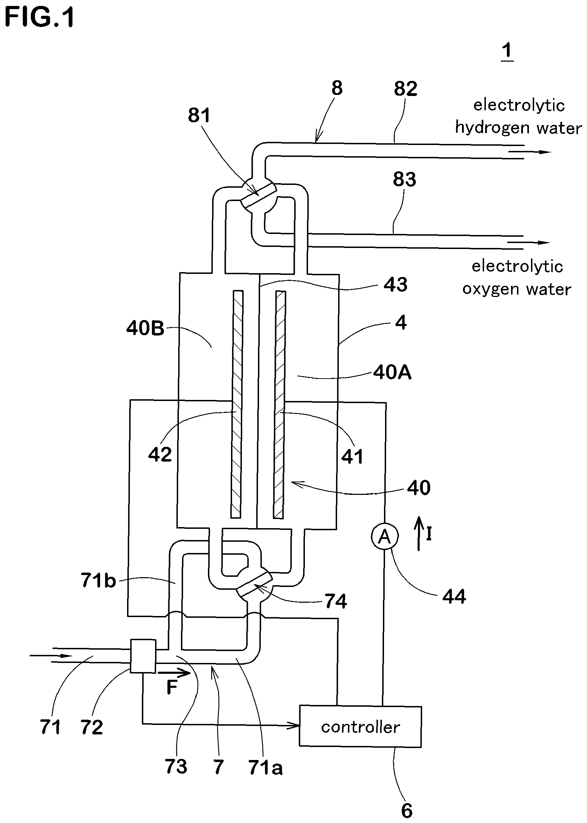

Fig. 1 illustrates a schematic configuration of an electrolytic water production device 1 in this embodiment. The electrolytic water production device 1 may be used to produce domestic drinking water, cooking water, and hemodialysis fluid.

The electrolytic water production device 1 includes an electrolytic cell 4 provided with an electrolytic chamber 40 to which water to be electrolyzed is supplied, an anode power feeder 41 and a cathode power feeder 42 arranged opposed to each other in the electrolytic chamber 40, and a diaphragm 43 interposed between the anode power feeder 41 and the cathode power feeder 42. Another electrolytic cell may be provided upstream or downstream from the electrolytic cell 4. In addition, another electrolytic cell may be provided in parallel with the electrolytic cell 4. The separately provided electrolytic chambers can be configured in the same manner as the electrolytic cell 4.

The diaphragm 43 divides the electrolytic chamber 40 into an anode chamber 40A located on a side of the anode power feeder 41 and a cathode chamber 40B located on a side of the cathode power feeder 42. water is supplied to both of the anode chamber 40A and the cathode chamber 40B in the electrolytic chamber 40, and then a direct-current voltage is applied to the anode power feeder 41 and the cathode power feeder 42 to electrolyze the water in the electrolytic chamber 40.

The diaphragm 43 allows ions generated by the electrolysis to pass through so that the anode power feeder 41 and the cathode power feeder 42 are electrically connected to each other via the diaphragm 43. The diaphragm 43 is formed from a solid polymer material made of a fluorine-based resin material having a sulfonate group, for example.

In the electrolytic cell 4 including the diaphragm 43 made from the solid polymer material, neutral electrolytic hydrogen water and electrolytic oxygen water are produced. When water is electrolyzed in the electrolytic chamber 40, the electrolytic hydrogen water with hydrogen gas dissolved therein is obtained in the cathode chamber 40B and the electrolytic oxygen water with oxygen gas dissolved therein is obtained in the anode chamber 40A. The electrolytic hydrogen water may be referred to as "electrolytic reduced water", "reduced water", "reduction water", "alkali reduced water", "reduced hydrogen water", etc.)

The electrolytic water production device 1 further includes a controller 6 that controls the electrolytic cell 4, a water inlet part 7 that is provided upstream of the electrolytic cell 4, and a water outlet part 8 that is provided downstream of the electrolytic cell 4.

The controller 6 includes a central processing unit (CPU) executing various kinds of arithmetic processing and information processing, a memory that stores programs and various kinds of information for controlling operations of the CPU, and the like.

A current detector 44 is provided in a current supply line between the anode power feeder 41 and the controller 6. The current detector 44 may be provided in a current supply line between the cathode power feeder 42 and the controller 6. The current detector 44 detects an electrolytic current supplied to the power feeders 41 and 42, and then outputs a signal corresponding to the detected value to the controller 6.

The controller 6 performs a feedback control on a voltage to be applied between the anode power feeder 41 and the cathode power feeder 42 based on the signal input from the current detector 44. For example, when the electrolytic current is too large, the controller 6 decreases the voltage, and when the electrolytic current is too small, the controller 6 increases the voltage. Accordingly, the electrolytic current supplied to the power feeders 41 and 42 can be controlled in an appropriate manner.

The water inlet part 7 includes a water supply pipe 71, a flow rate sensor 72, a branch part 73, a flow adjustment valve 74, and others. The water supply pipe 71 guides the water supplied to the electrolytic water production device 1 to the electrolytic chamber 40. The flow rate sensor 72 is provided in the water supply pipe 71. The flow rate sensor 72 detects flow amount F of the water supplied to the electrolytic chamber 40 per unit time (hereinafter, may be simply referred to as "flow amount") on a regular basis and outputs a signal corresponding to the detected value to the controller 6.

The branch part 73 branches the water supply pipe 71 into two water supply pipes 71a and 71b. The flow adjustment valve 74 connects the water supply pipes 71a and 71b to the anode chamber 40A or the cathode chamber 40B. The flow amounts of the water supplied to the anode chamber 40A and the cathode chamber 40B are adjusted by the flow adjustment valve 74 under control of the controller 6. The flow adjustment valve 74 adjusts the flow amounts of the water supplied to the anode chamber 40A and the cathode chamber 40B to increase water utilization efficiency. This may cause a pressure difference between the anode chamber 40A and the cathode chamber 40B.

The flow rate sensor 72 in this embodiment is provided upstream of the branch part 73, therefore, the flow rate sensor 72 detects the sum total of the flow amount of the water supplied to the anode chamber 40A and the flow amount of the water supplied to the cathode chamber 40B, that is, the flow amount F of the water supplied to the electrolytic chamber 40.

The water outlet part 8 has a flow path switching valve 81, a discharge pipe 82, a drain pipe 83, and others. The flow path switching valve 81 selectively connects the anode chamber 40A and the cathode chamber 40B to the discharge pipe 82 or the drain pipe 83. when the electrolytic water production device 1 is used to produce hemodialysis fluid, the electrolytic hydrogen water produced in the cathode chamber 40B is supplied via the discharge pipe 82 to a reverse osmosis membrane module for filtration treatment, a diluter for dilution of raw hemodialysis fluid, and the like.

The controller 6 controls polarity of the direct-current voltage applied to the anode power feeder 41 and the cathode power feeder 42. For example, the controller 6 integrates the flow amount F of the water supplied to the electrolytic chamber 40 based on the signal input from the flow rate sensor 72, and when the flow amount F reaches a predetermined value, the controller 6 switches the polarity of the direct-current voltage applied to the anode power feeder 41 and the cathode power feeder 42. Accordingly, the anode chamber 40A and the cathode chamber 40B are interchanged. When switching the polarity of the direct-current voltage, the controller 6 controls the flow adjustment valve 74 and the flow path switching valve 81 to operate in synchronization. Accordingly, the cathode chamber 40B is constantly connected with the discharge pipe 82, therefore, the electrolytic hydrogen water produced in the cathode chamber 40B is constantly discharged from the discharge pipe 82.

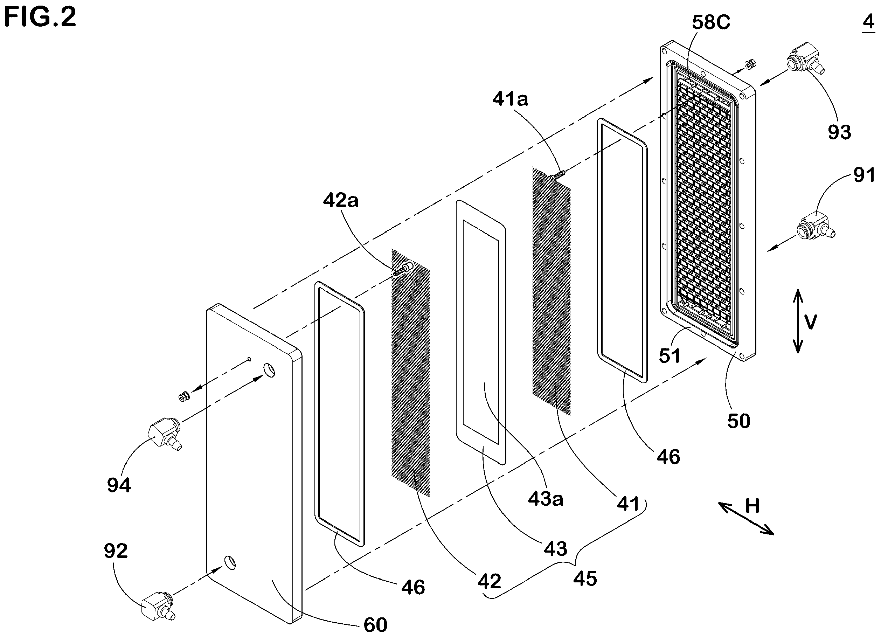

Fig. 2 is an exploded perspective view of the electrolytic cell 4. The electrolytic cell 4 includes a first case piece 50 arranged on the side of the anode power feeder 41 and a second case piece 60 arranged on the side of the cathode power feeder 42. The first case piece 50 and the second case piece 60 arranged opposite to each other are fixed together so that the electrolytic chamber 40 is formed inside (see Fig. 1).

The electrolytic cell 4 has a stacked body 45 in which the anode power feeder 41, the diaphragm 43, and the cathode power feeder 42 are stacked in the electrolytic chamber 40.

The anode power feeder 41 and the cathode power feeder 42 are each configured in such a manner that water can move between them in a thickness direction of the power feeders. Net-like metal such as expanded metal, for example, can be used for the anode power feeder 41 and the cathode power feeder 42. The net-like anode power feeder 41 and cathode power feeder 42 configured as such can allow the water to reach the entire surface of the diaphragm 43 while sandwiching the diaphragm 43 therebetween, therefore, the electrolysis of the water is promoted in the electrolytic chamber 40. The anode power feeder 41 and the cathode power feeder 42 in this embodiment are formed of the expanded metal of titanium coated with a platinum plating layer. The platinum plating layer prevents oxidation of the titanium.

The anode power feeder 41 is provided with a terminal 41a that penetrates through the first case piece 50 to protrude outside the electrolytic cell 4. Similarly, the cathode power feeder 42 is provided with a terminal 42a that penetrates through the second case piece 60 to protrude outside the electrolytic cell 4. The direct-current voltage is applied to the anode power feeder 41 and the cathode power feeder 42 via the terminals 41a and 42a.

The diaphragm 43 in this embodiment is made from a solid polymer material including a fluorine-based resin material with a sulfonate group, for example. In the electrolytic cell 4 having the diaphragm 43 made from the solid polymer material, neutral electrolytic water is produced. A platinum plating layer 43a is formed on each of both surfaces of the diaphragm 43. The plating layers 43a are in contact with the anode power feeder 41 and the cathode power feeder 42, therefore, they are electrically connected.

The diaphragm 43 is sandwiched between the anode power feeder 41 and the cathode power feeder 42 in the electrolytic chamber 40. Therefore, the shape of the diaphragm 43 is held by the anode power feeder 41 and the cathode power feeder 42. According to a structure of holding the diaphragm 43 configured as such, most of stress due to the pressure difference between the anode chamber 40A and the cathode chamber 40B is received by the anode power feeder 41 and the cathode power feeder 42, therefore, the stress applied to the diaphragm 43 is reduced. Thereby, the diaphragm 43 does not receive large stress even when the electrolytic water production device 1 is operated in such a manner in which a great pressure difference between the anode chamber 40A and the cathode chamber 40B is generated. Therefore, it is possible that damage to the diaphragm 43 is suppressed and the water utilization efficiency is easily increased.

In addition, the diaphragm 43 is sandwiched between the anode power feeder 41 and the cathode power feeder 42, therefore, contact resistance between the plating layer 43a on the diaphragm 43 and the anode power feeder 41 and between the plating layer 43a and the cathode power feeder 42 is decreased, thereby a voltage drop is suppressed. This helps the electrolysis in the electrolytic chamber 40 and enables the production of electrolytic hydrogen water having high-concentration of dissolved hydrogen.

Seal members 46 are provided on the outsides of the outer peripheral edges of the anode power feeder 41 and the cathode power feeder 42 to prevent water leakage from the mating surfaces of the first case piece 50 and the second case piece 60. Outer periphery of the diaphragm 43 is sandwiched between the seal members 46.

The case pieces 50 and 60 are formed in a rectangular shape elongated in a longitudinal direction (v) along the flow of the water in the electrolytic chamber 40. Accordingly, the electrolytic chamber 40 is formed in a rectangular shape longer in the longitudinal direction (v). The longitudinally-elongated electrolytic chamber 40 makes the flow path long in the electrolytic cell 4. As a result, it makes it easy for the hydrogen gas generated on the cathode chamber 40B to dissolve in the water in the cathode chamber 40B, thereby it is possible that the concentration of the dissolved hydrogen is increased.

The electrolytic cell 4 is provided with L-shaped joints 91, 92, 93, and 94. The joints 91 and 92 are attached to the lower parts of the first case piece 50 and the second case piece 60 respectively, and are connected to the flow adjustment valve 74. The joints 93 and 94 are attached to the upper parts of the first case piece 50 and the second case piece 60 respectively, and are connected to the flow path switching valve 81. By starting water supply to the electrolytic water production device 1, a general flow of water from the lower parts to the upper parts of the anode chamber 40A and the cathode chamber 40B is generated.

The hydrogen gas generated in the cathode chamber 40B moves in a form of micro bubble to the upper side of the cathode chamber 40B. In this embodiment, the direction of the movement of the hydrogen gas and the direction of the general water flow coincide with each other, therefore, it is easy for the hydrogen molecules to dissolve in the water, thereby the concentration of the dissolved hydrogen is increased.

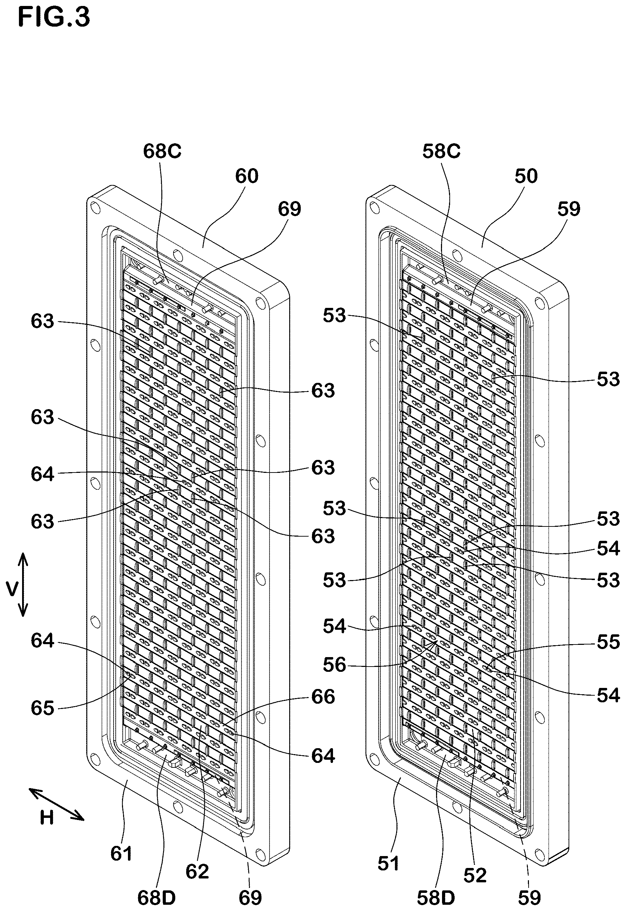

Fig. 3 is a perspective view of the first case piece 50 and the second case piece 60 seen from an inner side of the electrolytic chamber 40.

Mating surfaces 51 and 61 are respectively formed on outer peripheral portions of inner surfaces of the first case piece 50 and the second case piece 60 for fixing the first case piece 50 and the second case piece 60 together. Electrolytic parts 52 and 62 are formed respectively on the insides of the mating surfaces 51 and 61 as depressions from the mating surfaces 51 and 61 in thickness directions of the first case piece 50 and the second case piece 60. The electrolytic part 52 forms the anode chamber 40A and the electrolytic part 62 forms the cathode chamber 40B.

The first case piece 50 is provided on an inner surface thereof with a plurality of first projections 53. The first projections 53 are arranged in a matrix (in a row-and-column form) in the longitudinal direction (v) and in a lateral direction (H) perpendicular to the longitudinal direction (v). with regard to a layout of the projections, the "matrix" refers to the layout of the projections in which m of the projections are aligned in the longitudinal direction (v) and n of the projections are aligned in the lateral direction (H) (m rows multiplied by n columns), wherein "m" and "n" are each integers of 2 or more. The same applies hereinafter.

The second case piece 60 is provided on an inner surface thereof with a plurality of second projections 63. The second projections 63 are arranged in a matrix in the longitudinal direction (v) and the lateral direction (H).

The first projections 53 are in contact with the anode power feeder 41 in the anode chamber 40A so as to push the anode power feeder 41 toward the second case piece 60. The second projections 63 are in contact with the cathode power feeder 42 in the cathode chamber 40B so as to push the cathode power feeder 42 toward the first case piece 50. Therefore, the stacked body 45 is sandwiched between the first projections 53 and the second projections 63.

In this embodiment, when the first case piece 50 and the second case piece 60 are fixed to each other, the second projections 63 are arranged between the first projections 53 adjacent to each other by the shortest distance, that is adjacent right next to each other, in the longitudinal direction (v). Accordingly, the number of lines of the second projections 63 is smaller by one than the number of lines of the first projections 53. Further, the second projections 63 are arranged between the first projections 53 adjacent to each other by the shortest distance, that is adjacent right next to each other, in the lateral direction (H).

with a relative arrangement of the first projections 53 and the second projections 63 configured as such, the second projections 63 are distributed discretely and scattered evenly in the cathode chamber 40B in the longitudinal direction (v) and the lateral direction (H). Accordingly, water flows at a high flow rate between the second projections 63 scattered in the cathode chamber 40B in the longitudinal direction (v) and the lateral direction (H), therefore, a sufficient amount of water is supplied onto the surface of the cathode power feeder 42. Thereby, even when a large electrolytic current is supplied to the power feeders 41 and 42 to generate a large amount of hydrogen gas on the surface of the cathode power feeder 42, for example, that the concentration of the dissolved hydrogen in the electrolytic hydrogen water is suppressed from getting locally close to a saturated value thereof, therefore, the concentration of the dissolved hydrogen in the entire cathode chamber 40B is increased. In addition, even when a flow amount of water supplied to the cathode chamber 40B is small, for example, the concentration of the dissolved hydrogen in the electrolytic hydrogen water is suppressed from getting locally close to the saturated value, therefore, the concentration of the dissolved hydrogen in the entire cathode chamber 40B is increased.

Meanwhile, the first projections 53 are distributed discretely and scattered evenly in the anode chamber 40A in the longitudinal direction (v) and the lateral direction (H). Accordingly, water flows at a high flow rate between the first projections 53 scattered in the anode chamber 40A in the longitudinal direction (v) and the lateral direction (H), therefore, a sufficient amount of water is supplied onto the surface of the anode power feeder 41. Thereby, as in the cathode chamber 40B described above, the concentration of the dissolved oxygen in the entire anode chamber 40A is increased. This makes it easy for the oxygen gas generated in the anode chamber 40A to dissolve in the water in the anode chamber 40A, therefore, it is easy to discharge the generated oxygen.

The first projections 53 and the second projections 63 are formed in a longitudinally-long shape elongated in the longitudinal direction (v). with the longitudinally-long first projections 53 and second projections 63 configured as such, the water is rectified in the anode chamber 40A and the cathode chamber 40B, therefore, it is possible that the stacked body 45 is supported in a wide area thereof without the general flow of water in the longitudinal direction (v) being interrupted. Therefore, the contact resistance between the power feeders 41 and 42 and the plating layers 43a on the diaphragm 43 is decreased, therefore, it is possible that the water in the electrolytic chamber 40 is electrolyzed efficiently. The longitudinally-long first projections 53 in this embodiment have elliptic cylindrical shapes. Alternatively, the first projections 53 may have long-circular cylindrical shapes or rectangular parallelepiped shapes.

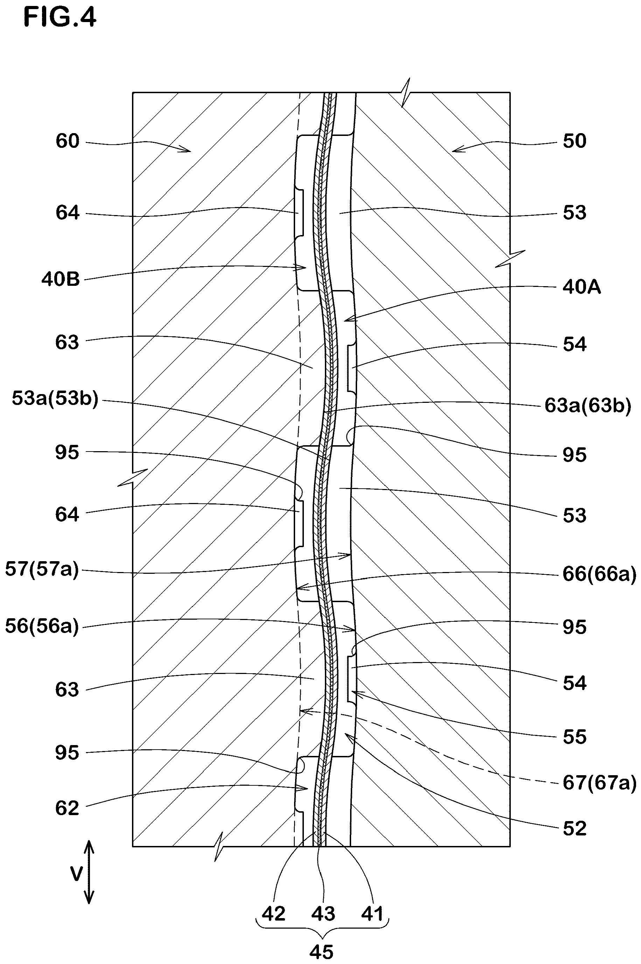

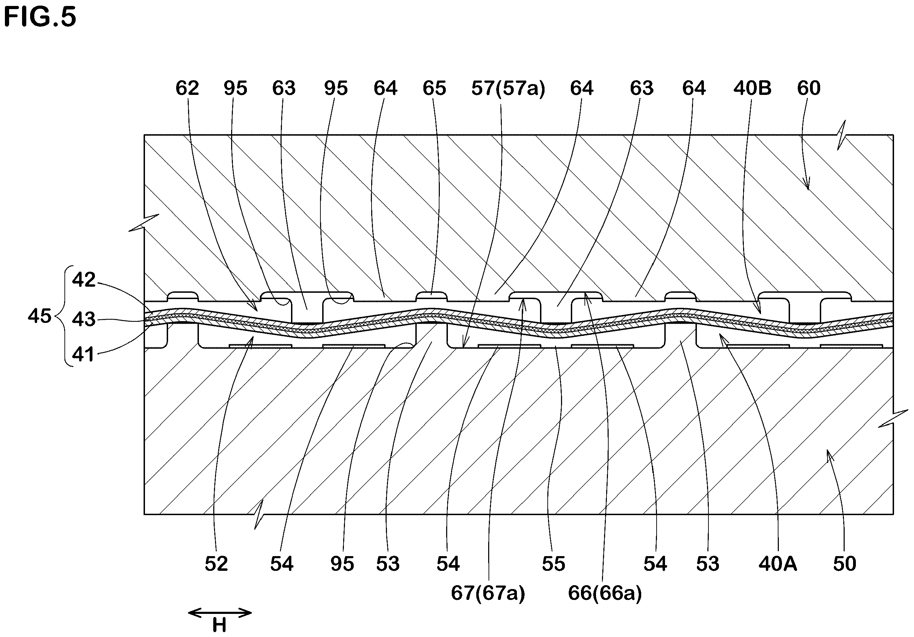

Fig. 4 is an enlarged view of part of the cross section of the electrolytic cell 4 taken along the longitudinal direction (v). Fig. 5 is an enlarged view of part of the cross section of the electrolytic cell 4 taken along the lateral direction (H).

The first projections 53 are pressed agaist and in contact at top portions 53a with the anode power feeder 41. The top portions 53a are configured to protrude so as to be at about the same height with the mating surface 51. Accordingly, the anode power feeder 41 is pushed by the top portions 53a and protruded toward the second case piece 60 at portions in contact with the top portions 53a. On the other hand, the second projections 63 are pressed agaist and in contact at top portions 63a with the cathode power feeder 42. Accordingly, the cathode power feeder 42 is pressed by the top portions 63a and protruded toward the first case piece 50 at portions in contact with the top portions 63a.

As illustrated in Fig. 4, in the present invention, each of the second projections 63 is arranged between a pair of the first projections 53 adjacent to each other in the longitudinal direction (v). Therefore, the stacked body 45 is changed to be in a wavy shape as seen in a cross section taken along the longitudinal direction (v). As illustrated in Fig. 5, in the present invention, each of the second projections 63 are arranged between a pair of the first projections 53 adjacent to each other by the shortest distance, that is adjacent right next to each other, in the lateral direction (H). Therefore, the stacked body 45 is changed to be in a wavy shape as seen in a cross section taken along the lateral direction (H) as well. The stacked body 45 configured to be in a wavy shape as such has high bending rigidity. Accordingly, even under great stress due to the pressure difference in the electrolytic chamber 40, deformation of the stacked body 45 is suppressed, therefore, damage to the diaphragm 43 is prevented.

As illustrated in Fig. 4, the top portions 53a of the first projections 53 include convex curved surfaces 53b having centers thereof on a side of the first case piece 50. The convex curved surfaces 53b may each be quadric surfaces like part of side surface of a cylinder or tertiary curved surface like part of surface of a sphere. Since the top portions 53a are formed as the convex curved surfaces 53b, the wavy form of the stacked body 45 has less sharp curvatures. Thereby, concentration of stress on the diaphragm 43 is decreased and therefore damage to the diaphragm 43 is suppressed.

The top portions 63a of the second projections 63 include convex curved surfaces 63b having centers thereof on a side of the second case piece 60. The convex curved surfaces 63b are similar to the convex curved surfaces 53b.

As illustrated in Figs. 3 and 4, the first case piece 50 has a plurality of first small projections 54 smaller in height than the first projections 53 and arranged on the inner surface facing the electrolytic chamber 40. Similarly, the second case piece 60 has a plurality of second small projections 64 smaller in height than the second projections 63 and arranged on the inner surface facing the electrolytic chamber 40.

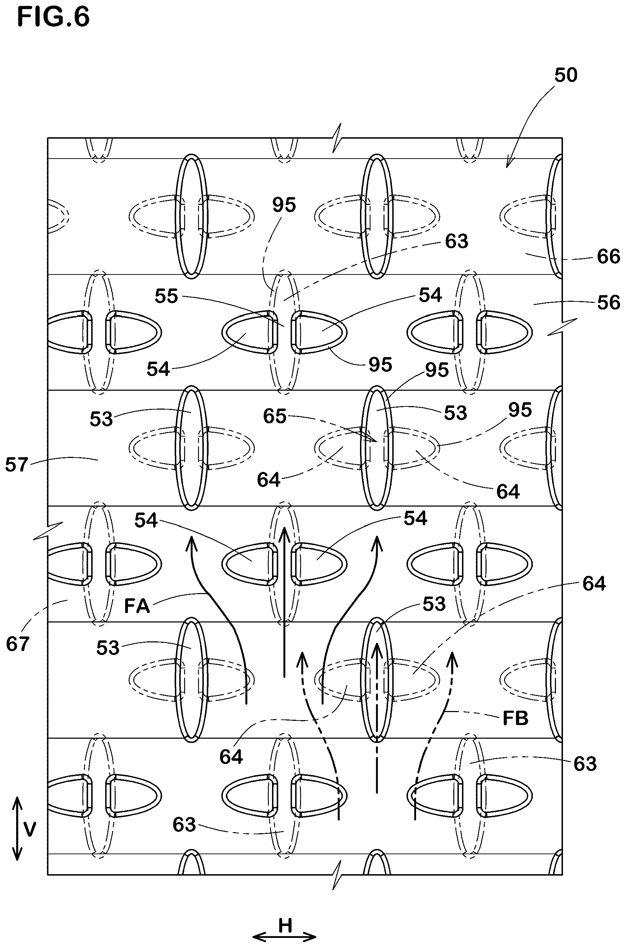

Fig. 6 is a transparent plan view of the second case piece 60 and the stacked body 45 seen from the outer side of the second case piece 60. In Fig. 6, part of the electrolytic cell 4 is enlarged, and the second projections 63 and the second small projections 64 are shown by two-dot chain lines so as to overlap the first small projections 54 and the first projections 53. In addition, a water flow FA in the anode chamber 40A is shown by a solid line and a water flow FB in the cathode chamber 40B is shown by a two-dot chain line.

As illustrated in Figs. 3 to 6, each of the first small projections 54 is disposed so as to oppose corresponding one of the second projections 63 of the second case piece 60 with the stacked body 45 therebetween. The first small projections 54 each block part of the water flowing in the longitudinal direction (v) between the first projections 53 adjacent to each other in the lateral direction (H), and guide the blocked water to both ends in the lateral direction (H) of the first small projections 54, that is, guide the blocked water to areas between the first projections 53 adjacent to each other in the longitudinal direction (v). Accordingly, the water in the anode chamber 40A is locally stirred around the first small projections 54. Therefore, the general water flow in the longitudinal direction (v) generated by the first projections 53 and the local water flow generated by the first small projections 54 are merged together and thus the water flow FA supplied onto the surface of the anode power feeder 41 is made further uniform, therefore, the concentration of the dissolved hydrogen is increased.

It is preferred that the first small projections 54 are each formed in a laterally-long shape. The first small projections 54 configured as such are highly effective in guiding the water to the areas between the first projections 53 adjacent to each other in the longitudinal direction (v), thereby the water flow FA supplied onto the surface of the anode power feeder 41 is made further uniform, and thus the concentration of the dissolved hydrogen is increased. In this embodiment, the laterally-long first projections 53 are formed as elliptic cylindrical projections. Alternatively, the first projections 53 may be formed as long-circular cylindrical projections or rectangular parallelepiped projections.

As illustrated in Figs. 4 and 5, the first small projections 54 are smaller in height than the first projections 53 and are not in contact with the anode power feeder 41. Accordingly, a flow path is formed between the first small projections 54 and the anode power feeder 41 to further unify the water flow FA supplied onto the surface of the anode power feeder 41.

As illustrated in Figs. 3 to 6, each of the second small projections 64 is disposed so as to oppose corresponding one of the first projections 53 of the first case piece 50 with the stacked body 45 therebetween. The second small projections 64 each guide part of the water flowing in the longitudinal direction (v) between the second projections 63 adjacent to each other in the lateral direction (H) to both ends in the lateral direction (H) of the second small projections 64, that is, guide the water to areas between the second projections 63 adjacent to each other in the longitudinal direction (v). Accordingly, the water in the cathode chamber 40B is locally stirred around the second small projections 64. Therefore, the general water flow generated by the second projections 63 in the longitudinal direction (v) and the local water flow generated by the second small projections 64 are merged together to further and thus the water flow FB supplied onto the surface of the cathode power feeder 42 is made further uniform, therefore, the concentration of the dissolved hydrogen is increased.

As illustrated in Figs. 4 and 5, it is preferred that the second small projections 64 are formed in laterally-long shapes. The second small projections 64 configured as such are highly effective in guiding the water to the areas between the second projections 63 adjacent to each other in the longitudinal direction (v), thereby the water flow FB supplied onto the surface of the cathode power feeder 42 is made further uniform and therefore the concentration of the dissolved hydrogen is increased. In this embodiment, the laterally-long second projections 63 are formed as elliptic cylindrical projections. Alternatively, the second projections 63 may be formed as long-circular cylindrical projections or rectangular parallelepiped projections.

The second small projections 64 are smaller in height than the second projections 63 and are not in contact with the cathode power feeder 42. Accordingly, a flow path is formed between the second small projections 64 and the cathode power feeder 42, and therefore the water flow FB supplied onto the surface of the cathode power feeder 42 is made further uniform.

As illustrated in Figs. 3 and 6, each of the first small projections 54 is provided with a groove 55 penetrating through the each of the first small projections 54 in the longitudinal direction (v). Number, width, and depth of the groove 55 in each of the first small projections 54 can be set appropriately. In this embodiment, single groove 55 is provided in a center in the lateral direction (H) of each of the first small projection 54. Further, the depths of the grooves 55 are equal to the heights of the first small projections 54. The grooves 55 guide to the longitudinal direction (v) part of the water flowing between the first projections 53 adjacent to each other in the lateral direction (H), and let the water pass through the first small projections 54. Owing to the grooves 55, the water flow FA supplied onto the surface of the anode power feeder 41 is made further uniform.

Similarly, each of the second small projections 64 is provided with a groove 65 penetrating through the each of the second small projections 64 in the longitudinal direction (v). The number and others of the grooves 65 are the same as those of the grooves 55. The grooves 65 guide to the longitudinal direction (v) part of the water flowing between the second projections 63 adjacent to each other in the lateral direction (H), and let the water pass through the second small projections 64. Owing to the grooves 65, the water flow FB supplied onto the surface of the cathode power feeder 42 is made further uniform.

As illustrated in Fig. 4, in the inner surface of the first case piece 50 facing the electrolytic chamber 40, regions 56 where the first small projections 54 are arranged in the lateral direction (H) include concave curved surfaces 56a. The concave curved surfaces 56a have centers thereof on the side of the second case piece 60 in the cross section in the longitudinal direction (v). The concave curved surfaces 56a are configured to be curved in correspondence with the diaphragm 43 curved in the wavy shape. The concave curved surfaces 56a ensure sufficient area for the water flow path between the diaphragm 43 and the regions 56 in the cross section. Thereby, the water flow FA supplied onto the surface of the anode power feeder 41 is made further uniform.

In the inner surface of the first case piece 50, regions 57 where the first projections 53 are arranged in the lateral direction (H) include convex curved surfaces 57a. The convex curved surfaces 57a have centers thereof on the side of the first case piece 50 in the cross section in the longitudinal direction (v). The convex curved surfaces 57a are configured to be curved in correspondence with the diaphragm 43 curved in the wavy shape. The concave curved surfaces 56a and the convex curved surfaces 57a are smoothly connected with each other at boundaries between the regions 56 and the regions 57. Thereby, the water flow FA in the anode chamber 40A is made further smooth, and therefore, it is possible that the flow rate is increased.

In the inner surface of the second case piece 60 facing the electrolytic chamber 40, regions 66 where the second small projections 64 are arranged in the lateral direction (H) include concave curved surfaces 66a. The concave curved surfaces 66a have centers thereof on the side of the first case piece 50 in the cross section in the longitudinal direction (v). The concave curved surfaces 66a have same effects as the concave curved surfaces 56a and therefore the water flow FB supplied onto the surface of the cathode power feeder 42 is made further uniform.

In the inner surface of the second case piece 60, regions 67 where the second projections 63 are arranged in the lateral direction (H) include convex curved surfaces 67a. The convex curved surfaces 67a have centers thereof on the side of the second case piece 60 in the cross section in the longitudinal direction (v). The convex curved surfaces 67a are configured to be curved in correspondence with the diaphragm 43 curved in the wavy shape. The concave curved surfaces 66a and the convex curved surfaces 67a are smoothly connected with each other at boundaries between the regions 66 and the regions 67. Thereby, the water flow FB in the cathode chamber 40B is made further smooth, therefore, it is possible that the flow rate is increased.

As illustrated in Figs. 4 to 6, each of the first projections 53 and corresponding one of the second small projections 64 are disposed so as to oppose each other with the stacked body 45 therebetween. Similarly, the second projections 63 and the first small projections 54 are each disposed so as to oppose each other with the stacked body 45 therebetween.

As described above, the first small projections 54 block part of the water flowing through the anode chamber 40A and guide the blocked water to the peripheries of the first small projections 54. Similarly, the second small projections 64 block part of the water flowing through the cathode chamber 40B and guide the blocked water to the peripheries of the second small projections 64. Therefore, the water in the anode chamber 40A and the water in the cathode chamber 40B are stirred, and thus the water flows FA and FB supplied onto the surface of the anode power feeder 41 and the surface of the cathode power feeder 42 respectively are made further uniform, thereby, the concentration of the dissolved hydrogen is increased.

Further, the first small projections 54 are not in contact with the anode power feeder 41, and the second small projections 64 are not in contact with the cathode power feeder 42. Therefore, water flow paths are formed between the first small projections 54 and the anode power feeder 41 and between the second small projections 64 and the cathode power feeder 42, therefore, the water flows FA and FB supplied onto the surfaces of the anode power feeder 41 and the cathode power feeder 42 are made further uniform.

Note that it is possible that the first small projections 54 and the second small projections 64 block the water flows FA and FB in the anode chamber 40A and the cathode chamber 40B. In this embodiment, however, the first small projections 54 are smaller in height than the first projections 53 so that the first small projections 54 are not in contact with the anode power feeder 41. Therefore, flow paths are formed between the first small projections 54 and the anode power feeder 41, thereby, possibility of the first small projections 54 blocking the water flow FA in the anode chamber 40A is limited. Similarly, possibility of the second small projections 64 blocking the water flow FB in the cathode chamber 40B is limited.

As illustrated in Fig. 3, a first water diversion path 58D is formed in a lower part of the inner surface of the first case piece 50. The first water diversion path 58D extends in the lateral direction (H) of the first case piece 50 and is connected with the electrolytic part 52. Water flows from the joint 91 into the electrolytic part 52 via the first water diversion path 58D, and then flows upward in the gaps between the first projections 53 and others. Similarly, a second water diversion path 68D is formed in a lower part of the inner surface of the second case piece 60. The second water diversion path 68D extends in the lateral direction (H) of the second case piece 60 and is connected with the electrolytic part 62. Water flows from the joint 92 into the electrolytic part 62 via the second water diversion path 68D, and then flows upward in the gaps between the second projections 63 and others.

Meanwhile, a first water collecting path 58C is formed in an upper part of the inner surface of the first case piece 50. The first water collecting path 58C extends in the lateral direction (H) of the first case piece 50 and is connected with the electrolytic part 52. The water having moved to the upper side of the electrolytic part 52 is collected by the first water collecting path 58C and then flows out from the joint 93 to the outside of the electrolytic cell 4. Similarly, a second water collecting path 68C is formed in an upper part of the inner surface of the second case piece 60. The second water collecting path 68C extends in the lateral direction (H) of the second case piece 60 and is connected with the electrolytic part 62. The water having moved to the upper side of the electrolytic part 62 is collected by the second water collecting path 68C and then flows out from the joint 94 to the outside of the electrolytic cell 4.

with reference to the mating surface 51, the electrolytic part 52 is smaller in depth than the first water diversion path 58D and the first water collecting path 58C. The electrolytic part 52 configured as such increases the rate of water flowing through the electrolytic part 52, therefore, oxygen gas is easy to dissolve in the water. In addition, slopes 59 are formed between the electrolytic part 52 and the first water diversion path 58D and between the electrolytic part 52 and the first water collecting path 58C. The slopes 59 make the water flow FA in the anode chamber 40A smooth, therefore, decrease in the rate of the water flowing through the electrolytic part 52 is suppressed.

Similarly, with reference to the mating surface 61, the electrolytic part 62 is smaller in depth than the second water diversion path 68D and the second water collecting path 68C. The electrolytic part 62 configured as such increases the rate of the water flowing through the electrolytic part 62, therefore, hydrogen gas is easy to dissolve in the water. In addition, slopes 69 are formed between the electrolytic part 62 and the second water diversion path 68D and between the electrolytic part 62 and the second water collecting path 68C. The slopes 69 make the water flow FB smoothly in the cathode chamber 40B, therefore, decrease in the rate of the water flowing through the electrolytic part 62 is suppressed.

As illustrated in Figs. 4 to 6, fillet portions 95 connected smoothly with the bottom walls of the electrolytic parts 52 and 62 are provided on side walls of the first projections 53, the second projections 63, the first small projections 54, and the second small projections 64. The fillet portions 95 make the water flows smoothly in the anode chamber 40A and the cathode chamber 40B, and therefore decrease in the rate of the water flowing through the electrolytic parts 52 and 62 is suppressed.

while detailed description has been made of the electrolytic water production device 1 as an embodiment of the present invention, the present invention can be embodied in various forms without being limited to the illustrated embodiment. Specifically, the electrolytic water production device 1 may be at least configured to include: the electrolytic cell 4 provided with the electrolytic chamber 40 to which water to be electrolyzed is supplied; the anode power feeder 41 and the cathode power feeder 42 arranged opposite to each other in the electrolytic chamber 40; and the diaphragm 43 that is disposed between the anode power feeder 41 and the cathode power feeder 42 so as to divide the electrolytic chamber 40 into the anode chamber 40A and the cathode chamber 40B, wherein the diaphragm 43 is sandwiched between the anode power feeder 41 and the cathode power feeder 42, the electrolytic chamber 40 is formed in the electrolytic cell 4 by fixing the first case piece 50 disposed on the side of the anode power feeder 41 and the second case piece 60 disposed on the side of the cathode power feeder 42, a plurality of the first projections 53 pressed against and in contact with the anode power feeder 41 is arranged on the inner surface of the first case piece 50 in a matrix in the longitudinal direction (v) and the lateral direction (H), a plurality of the second projections 63 pressed against and in contact with the cathode power feeder 42 is arranged on the inner surface of the second case piece 60 in a matrix in the longitudinal direction (v) and the lateral direction (H), and each of the second projections 63 is disposed between a pair of the first projections 53 adjacent right next to each other in the longitudinal direction (v) and between a pair of the first projections 53 adjacent right next to each other in the lateral direction (H).

### Reference Signs List

- 1: pneumatic tire
- 4: electrolytic cell
- 40: electrolytic chamber
- 40A: anode chamber
- 40B: cathode chamber
- 41: anode power feeder
- 42: cathode power feeder
- 43: diaphragm
- 50: first case piece
- 53: first projection
- 60: second case piece
- 63: second projection

## Claims

1. An electrolytic water production device, comprising:
an electrolytic cell provided with an electrolytic chamber to which water is supplied to be electrolyzed;
an anode power feeder and a cathode power feeder arranged opposite to each other in the electrolytic chamber;
a diaphragm disposed between the anode power feeder and the cathode power feeder so as to divide the electrolytic chamber into an anode chamber located on a side of the anode power feeder and a cathode chamber located on a side of the cathode power feeder, wherein
the diaphragm is sandwiched between the anode power feeder and the cathode power feeder,
the electrolytic chamber is formed in the electrolytic cell by fixing a first case piece disposed on the side of the anode power feeder and a second case piece disposed on the side of the cathode power feeder together,
a plurality of first projections pressed against and in contact with the anode power feeder is arranged in a matrix on an inner surface of the first case piece facing the electrolytic chamber in a longitudinal direction along a water flow in the electrolytic chamber and in a lateral direction perpendicular to the longitudinal direction,
a plurality of second projections pressed against and in contact with the cathode power feeder is arranged in a matrix on an inner surface of the second case piece facing the electrolytic chamber in the longitudinal direction and in the lateral direction, and
each of the second projections is disposed between a pair of the first projections adjacent right next to each other in the longitudinal direction and between a pair of the first projections adjacent right next to each other in the lateral direction.

2. The electrolytic water production device according to claim 1, wherein the electrolytic chamber is formed in a rectangular shape elongated in the longitudinal direction.

3. The electrolytic water production device according to claim 1 or 2, wherein the first projections and the second projections are formed in elongated shapes in the longitudinal direction.

4. The electrolytic water production device according to any one of claims 1 to 3, wherein
top portions of the first projections include curved surfaces having centers thereof on a side of the first case piece, and
top portions of the second projections include curved surfaces having centers thereof on a side of the second case piece side.

5. The electrolytic water production device according to any one of claims 1 to 4, wherein
a plurality of first small projections smaller in height than the first projections are disposed on the inner surface of the first case piece facing the electrolytic chamber at positions opposed to the second projections with the diaphragm, the anode power feeder, and the cathode power feeder therebetween, and
a plurality of second small projections smaller in height than the second projections are disposed on the inner surface of the second case piece facing the electrolytic chamber at positions opposed to the first projections with the diaphragm, the anode power feeder, and the cathode power feeder therebetween.

6. The electrolytic water production device according to claim 5, wherein the first small projections and the second small projections are formed in elongated shapes in the lateral direction.

7. The electrolytic water production device according to claim 5 or 6, wherein each of the first small projections and the second small projections have a groove penetrating therethrough in the longitudinal direction.

8. The electrolytic water production device according to any one of claims 5 to 7, wherein
in the inner surface of the first case piece facing the electrolytic chamber, a region in which the first small projections are aligned in the lateral direction includes curved surfaces having centers thereof on a side of the second case piece in a cross section taken along the longitudinal direction, and
in the inner surface of the second case piece facing the electrolytic chamber, a region in which the second small projections are aligned in the lateral direction includes curved surfaces having centers thereof on a side of the first case piece in a cross section taken along the longitudinal direction.

9. An electrolytic water production device, comprising:
an electrolytic cell provided with an electrolytic chamber to which water is supplied to be electrolyzed;
an anode power feeder and a cathode power feeder arranged opposite to each other in the electrolytic chamber;
a diaphragm disposed between the anode power feeder and the cathode power feeder so as to divide the electrolytic chamber into an anode chamber located on a side of the anode power feeder and a cathode chamber located on a side of the cathode power feeder, wherein
the diaphragm is sandwiched between the anode power feeder and the cathode power feeder,
the electrolytic chamber is formed in the electrolytic cell by fixing a first case piece disposed on the side of the anode power feeder and a second case piece disposed on the side of the cathode power feeder together,
a plurality of first projections pressed against and in contact with the anode power feeder and a plurality of first small projections smaller in height than the first projections are disposed on an inner surface of the first case piece facing the electrolytic chamber,
a plurality of second projections pressed against and in contact with the cathode power feeder is disposed on an inner surface of the second case piece facing the electrolytic chamber at positions opposed to the first small projections with the diaphragm, the anode power feeder, and the cathode power feeder therebetween, and
a plurality of second small projections smaller in height than the second projections is disposed on the inner surface of the second case piece facing the electrolytic chamber at positions opposed to the first projections with the diaphragm, the anode power feeder, and the cathode power feeder therebetween.

10. The electrolytic water production device according to any one of claims 5 to 9, wherein
the first small projections are not in contact with the anode power feeder; and
the second small projections are not in contact with the cathode power feeder.

11. The electrolytic water production device according to claim 9 or 10, wherein the first projections and the second projections are formed in elongated shapes in a longitudinal direction along a water flow in the electrolytic chamber.

12. The electrolytic water production device according to claim 11, wherein the first small projections and the second small projections are formed in elongated shapes in a lateral direction perpendicular to the longitudinal direction.
